# FASCICULE DE BREVET EUROPEEN

(11) **EP 2 670 010 B1**
(45) Date de publication et mention de la délivrance du brevet: **12.11.2014**
(21) Numéro de dépôt: 13305626.7
(22) Date de dépôt: 16.05.2013
(51) Int. Cl.: H02G 3/08, H02G 3/12

(54) **Boîte électrique comprenant un dispositif d'entrée de gaine**
Elektrischer Schaltschrank, der eine Eingangsvorrichtung eines Leitungskanals umfasst
Electrical box comprising a sheath entry device

(30) Priorité: 01.06.2012 FR 1201581
(43) Date de publication de la demande: 04.12.2013
(73) Titulaire: Legrand France, 87000 Limoges (FR); Legrand SNC, 87000 Limoges (FR)
(72) Inventeur: Bardot, François, 87240 Ambazac (FR)
(74) Mandataire: Orsini, Fabienne

(56) Documents cités:
- WO-A2-2011/033052
- DE-A1- 3 314 865
- DE-A1- 3 403 387
- FR-A1- 2 853 774

## Description

### DOMAINE TECHNIQUE AUQUEL SE RAPPORTE L'INVENTION

La présente invention concerne de manière générale les boîtes électriques à encastrer, destinées à recevoir des câbles et/ou des conducteurs électriques.

De telles boîtes sont notamment des boîtes pour appareillages électriques, des boîtes de dérivation de câbles et/ou de conducteurs électriques et des boîtes formant tableaux d'abonnés.

L'invention trouve une application particulièrement avantageuse dans la réalisation d'une boîte électrique à encastrer dans une cloison sèche telle qu'une cloison alvéolaire.

Elle concerne plus particulièrement une boîte électrique comprenant une partie rigide qui est pourvue localement d'au moins un dispositif d'entrée destiné à accueillir une extrémité d'une gaine de transport de câbles et/ou de conducteurs électriques, chaque dispositif d'entrée comportant un manchon et une membrane souple qui lie ledit manchon à ladite partie rigide.

Elle concerne également un procédé d'insertion d'une extrémité d'une gaine de transport de câbles et/ou de conducteurs électriques à l'intérieur d'une telle boîte électrique.

### ARRIERE-PLAN TECHNOLOGIQUE

On connaît déjà du document FR2853774 appartenant aux demanderesses une boîte électrique dans laquelle le manchon est rigide et la membrane souple comporte une zone à soufflets apte à se déformer pour autoriser ledit manchon à pivoter pour prendre différentes orientations par rapport à l'axe principal de la boîte électrique.

Bien que cet agencement d'entrée de gaine facilite la mise en place de la boîte électrique dans n'importe quelle cloison sèche, il n'assure pas une étanchéité complète à l'air froid ou à la poussière du fait qu'il subsiste un jour entre la face interne du manchon et la face externe de la gaine insérée dans celui-ci.

En outre, cet agencement d'entrée de gaine est complexe à réaliser du fait que la membrane souple comporte des soufflets et que le manchon rigide comporte sur sa face interne un moyen de retenue de l'extrémité de la gaine en dehors du volume intérieur utile de la boîte électrique.

La complexité de réalisation de cette boîte électrique augmente son coût de fabrication.

### OBJET DE L'INVENTION

Afin de remédier aux inconvénients précités de l'état de la technique, la présente invention propose une nouvelle boîte électrique simple et peu onéreuse à réaliser, qui assure au niveau de l'entrée d'une gaine électrique une étanchéité totale, qui autorise la gaine à prendre différentes orientations par rapport à l'axe principal de la boîte électrique afin de faciliter sa mise en place dans tout type de cloison sèche et qui permet de positionner l'extrémité libre de la gaine en dehors du volume intérieur utile de la boîte électrique.

Plus particulièrement, l'invention propose une boîte électrique telle que définie dans la revendication 1.

D'autres caractéristiques non limitatives et avantageuses de la boîte électrique conforme à l'invention sont énoncées dans les revendications 2 à 9.

L'invention propose également un procédé d'insertion d'une extrémité d'une gaine de transport de câbles et/ou de conducteurs électriques à l'intérieur de la partie rigide d'une boîte électrique conforme à l'invention, qui comprend les étapes énoncées dans la revendication 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés:
- la figure 1 est une vue en perspective avant d'une boîte électrique selon l'invention ;
- la figure 2 est une vue en perspective arrière de la boîte électrique de la figure 1 ;
- la figure 3 est une vue de côté de la boîte électrique de la figure 1;
- la figure 4 est une vue de détail d'un dispositif d'entrée de la boîte électrique de la figure 1 ;
- les figures 5 à 8 représentent, vue en coupe axiale, les principales étapes du procédé conforme à l'invention pour insérer une gaine dans la boîte électrique de la figure 1 ;
- les figures 9 et 10 représentent, vue en coupe axiale, la boîte électrique de la figure 1 encastrée dans deux cloisons sèches différentes.

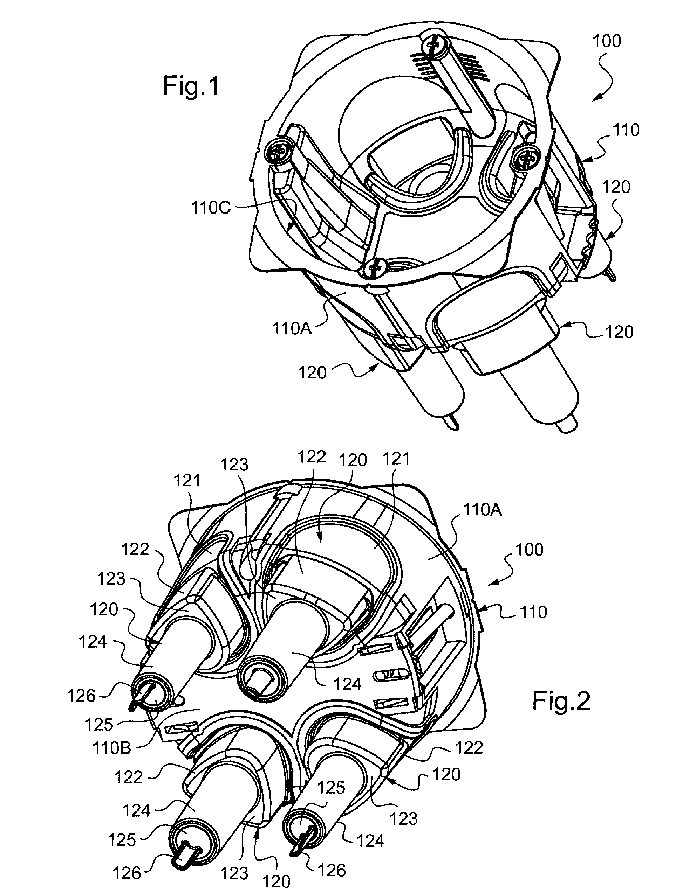

Sur les figures 1 à 3 on a représenté une boîte électrique 100 à encastrer, ici une boîte d'encastrement d'un appareillage électrique, destinée à recevoir dans son volume intérieur utile non seulement l'appareillage électrique en question non représenté, mais aussi les câbles et/ou les conducteurs électriques nécessaires à son alimentation.

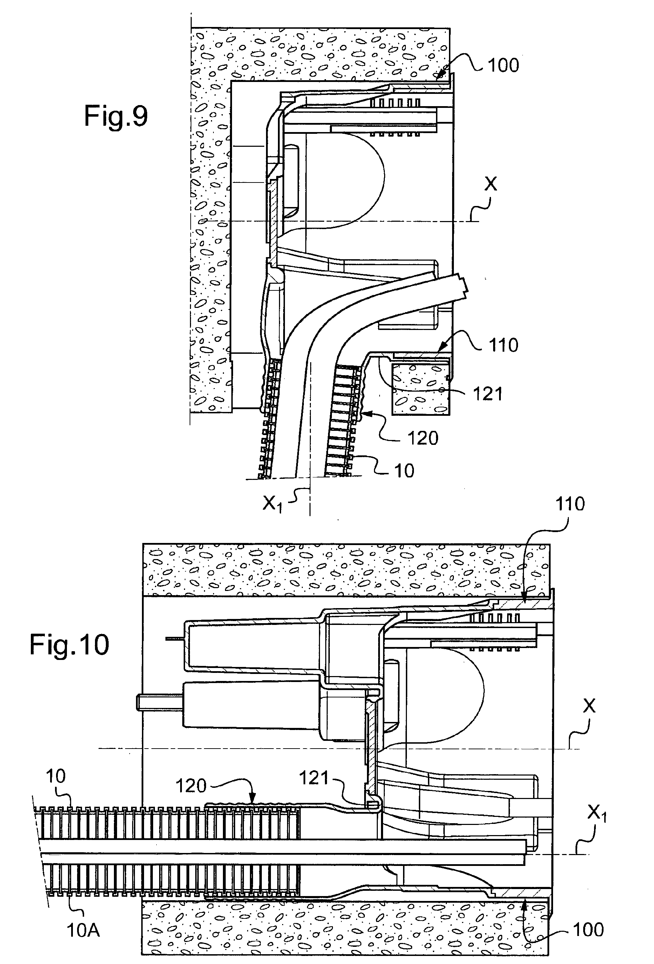

Cette boîte électrique 100 est avantageusement destinée à être encastrée dans une cloison sèche comme cela est représenté sur les figures 9 et 10.

Elle comprend une partie rigide 110 constituée par une paroi latérale 110A et un fond 110B qui délimitent le volume intérieur utile. La paroi latérale 110A est ici cylindrique de révolution autour d'un axe X central. Elle s'élève à partir du fond 110B circulaire. À l'opposé du fond 110B, la boîte électrique 100 comporte une ouverture circulaire 110C permettant l'introduction du mécanisme d'appareillage électrique dans ladite boîte électrique 100.

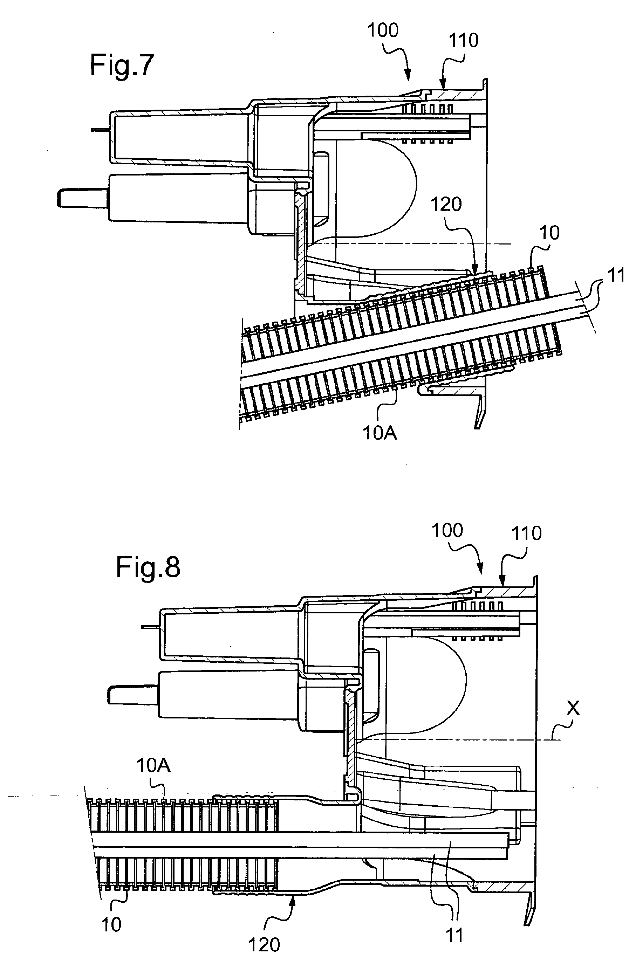

La partie rigide 110 de la boîte électrique 100 est pourvue d'une pluralité de dispositifs d'entrée 120, ici quatre dispositifs 120, répartis sur son pourtour et formant des entrées pour des gaines 10 de transport de câbles et/ou de conducteurs électriques (voir figures 8 à 10).

Bien entendu, selon une variante non représentée, on peut prévoir que la boîte électrique selon l'invention comporte dans sa partie rigide un seul dispositif d'entrée de câbles et/ou de conducteurs électriques

Chaque dispositif d'entrée 120 est destiné à accueillir l'extrémité d'une gaine 10 de transport de câbles et/ou de conducteurs électriques pour permettre l'entrée dans la boîte électrique des câbles et/ou des conducteurs nécessaires à la desserte de l'appareillage électrique correspondant.

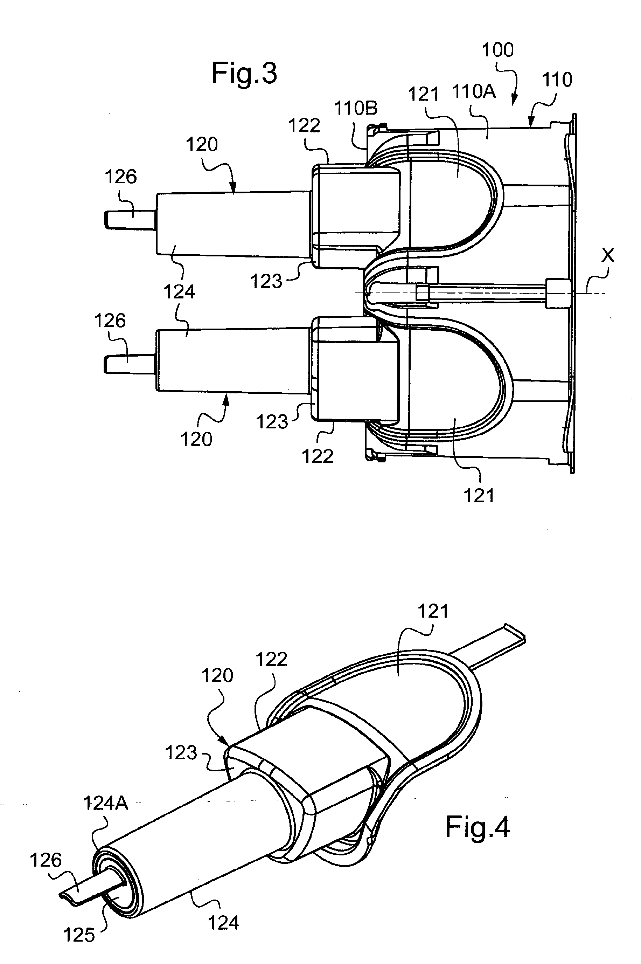

Comme le montre plus particulièrement la figure 4, chaque dispositif d'entrée 120 comporte une première membrane souple 121 qui obture une ouverture prévue dans la partie rigide 110 de la boîte électrique 100.

Cette ouverture présente ici un contour oblong et elle s'étend en partie sur ladite paroi latérale 110A et en partie sur le fond 110B de la boîte électrique 100. Ainsi, la première membrane 121 présente ici un contour oblong et s'étend sur la paroi latérale 110A et sur le fond 110B de la partie rigide 110 de la boîte électrique 100.

Bien entendu, selon une variante de réalisation non représentée, on pourrait prévoir des ouvertures circulaires dans la partie rigide de la boîte électrique et la première membrane souple présenterait alors un contour circulaire.

Ici, chaque première membrane souple 121 est située en retrait de la face externe de la paroi latérale 110A de la partie rigide 110 de la boîte électrique 100.

Chaque dispositif d'entrée 120 comporte en outre un premier manchon 122 qui s'étend à l'arrière de la partie rigide 110 de la boîte électrique 100 et qui débouche dans le volume intérieur utile de la boîte électrique.

La première membrane souple 121 lie une extrémité du premier manchon 122 à la partie rigide 110 de la boîte électrique 100.

Comme le montre la figure 3, en sortie de fabrication, le premier manchon 122 de chaque dispositif d'entrée 120 s'étend parallèlement à l'axe X central de la boîte électrique 100.

Chaque dispositif d'entrée 120 comporte, en outre, dans l'alignement arrière du premier manchon 122, un deuxième manchon 124 de plus petite section et une deuxième membrane souple 123 qui lie ce deuxième manchon 124 au premier manchon 122.

Le deuxième manchon 124 présente une extrémité libre 124A fermée par un opercule 125 retirable. Cet opercule 125 porte une languette de préhension 126 pour arracher l'opercule.

Selon une caractéristique particulièrement avantageuse, chaque dispositif d'entrée 120, comportant les deux manchons 122, 124 fermés à l'arrière par l'opercule 125 et les deux membranes souples 121, 123, est réalisé d'une seule pièce monobloc en matière souple.

La matière souple est préférentiellement une matière élastomère telle qu'un caoutchouc ou un styrène éthylène butylène styrène (SEBS).

Ainsi, comme cela va être décrit plus ultérieurement, chaque dispositif d'entrée 120 forme une chaussette destinée à envelopper la gaine 10 pour la maintenir en position par rapport à la partie rigide 110, selon une orientation choisie. Les différentes orientations de la gaine 10 par rapport à l'axe X de la boîte électrique 100 sont données grâce à la membrane souple 121 et au premier manchon 122 qui forment une rotule.

Par ailleurs, la partie rigide 110 de la boîte électrique 100 est réalisée en une matière thermoplastique telle qu'un polystyrène, un polypropylène ou un polyamide.

Chaque dispositif d'entrée 120 est surmoulé sur ladite partie rigide 110.

Selon un mode de réalisation de la boîte électrique 100, l'injection de la matière élastomère dans le moule pour la réalisation desdits dispositifs d'entrée 120 se fait en étoile sensiblement à partir du centre du fond 110B de la boîte électrique 100.

L'introduction d'une gaine 10 d'amenée de câbles et/ou de conducteurs électriques dans ladite boîte électrique 100 grâce à un dispositif d'entrée 120 se fait de la manière suivante.

Tout d'abord, l'installateur tire sur la languette de préhension 126 pour arracher l'opercule 125 et ouvrir le deuxième manchon 124 du dispositif d'entrée 120 correspondant.

Il enfile les câbles 11 issus de la gaine 10 au travers des deux manchons 122, 124 pour les introduire dans le volume intérieur utile de la boîte électrique 100.

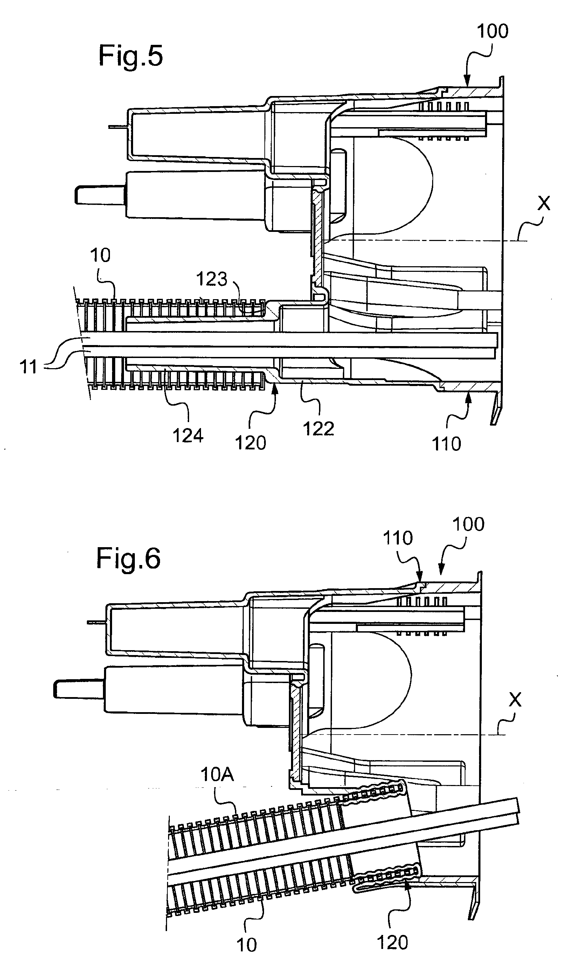

Puis, il enfile l'extrémité de la gaine 10 sur le deuxième manchon 124 du dispositif d'entrée 120 jusqu'à ce qu'elle bute contre la deuxième membrane souple 123 (voir figure 5). Ici, le deuxième manchon 124 sert de guide pour l'extrémité de la gaine 10 de sorte que celle-ci se positionne correctement en butée contre la deuxième membrane souple 123. A cet effet, il présente une section externe inférieure à la section interne de la gaine 10 tandis que l'autre manchon, le premier manchon 122, présente une section interne légèrement supérieure à la section externe de la gaine 10.

L'installateur insère alors ladite extrémité de la gaine 10 à l'intérieur de la partie rigide 110 de ladite boîte électrique 100 en traversant ledit premier manchon 122 qui se retrousse totalement sur la surface externe 10A de la gaine 10 en l'enveloppant étroitement (voir figure 6).

Puis il continue d'insérer ladite extrémité de la gaine 10 à l'intérieur de la partie rigide 110 de la boîte électrique 100 jusqu'à ce que le deuxième manchon 124 et ladite deuxième membrane 123 se retroussent également sur la surface externe 10A de la gaine 10 (voir figure 7). Toutefois, comme le deuxième manchon 124 présente une section externe inférieure à la section externe de la gaine 10, lorsqu'il se retrousse sur la gaine 10, il peut former des replis sur la gaine et il épouse parfaitement le relief des annelures de ladite gaine 10 en l'enserrant. Dans cette position, une partie de la gaine 10 émerge dudit dispositif d'entrée 120 dans le volume intérieur utile de la boîte électrique 100.

L'installateur coupe autour des câbles 11 cette partie de la gaine qui émerge dudit dispositif d'entrée 120.

Enfin, il tire la gaine 10 vers l'extérieur de la partie rigide de la boîte électrique 100 pour positionner l'extrémité de la gaine 10 en dehors du volume intérieur utile de câblage de la boîte électrique 100. Dans son mouvement de retrait, ladite gaine 10 entraîne lesdits premier et deuxième manchon 122, 124 et ladite deuxième membrane 123 avec elle de sorte qu'ils se retroussent vers l'extérieur de la partie rigide 110 de ladite boîte électrique tout en enveloppant étroitement l'extrémité de ladite gaine 10 (voir figure 8). Ici aussi, comme le deuxième manchon 124 présente une section externe inférieure à la section externe de la gaine 10, lorsqu'il se retrousse vers l'extérieur, il peut former des replis sur la surface externe de la gaine et il épouse parfaitement le relief des annelures de ladite gaine 10 en l'enserrant.

Ainsi, le dispositif d'entrée 120 maintien la gaine 10 selon l'orientation choisie, en dehors du volume utile de câblage. Ce volume est donc complètement disponible pour permettre à l'installateur de raccorder aisément les câbles 11 au mécanisme d'appareillage insérer dans ladite boîte électrique. En enveloppant étroitement la gaine 10, les deux manchons 122, 124 et la deuxième membrane souple 123 assurent au niveau de l'entrée des câbles une étanchéité totale à l'air froid et à la poussière. La souplesse du manchon 122 et de la membrane souple 121 qui le lie à la partie rigide 110 autorise un mouvement de pivotement de la gaine 10 d'une amplitude pouvant aller au de-là de 90° tout en assurant au niveau de l'entrée de la gaine dans la boîte électrique une étanchéité à l'air et/ou à la poussière.

Grâce au dispositif d'entrée 120, lors de la mise en place de la boîte électrique 100 dans une cloison sèche, l'installateur peut amener chaque gaine 10 dans la boîte électrique de telle manière que l'axe X1 de la gaine 10 s'étend parallèlement à l'axe X de la boîte électrique 100 (voir figure 10). Il peut également faire pivoter chaque gaine 10 d'un angle pouvant aller au de-là de 90°, grâce à la déformation du dispositif d'entrée 120, de façon à mettre en position définitive la boîte électrique 100 dans la cloison sèche, position dans laquelle l'axe X1 de chaque gaine 10 s'étend sensiblement perpendiculairement à l'axe X de la boîte électrique.

## Revendications

1. Boîte électrique (100) comprenant une partie rigide (110) qui est pourvue localement d'au moins un dispositif d'entrée (120) destiné à accueillir une extrémité d'une gaine (10) de transport de câbles et/ou de conducteurs électriques, chaque dispositif d'entrée (120) comportant un manchon (122) et une membrane souple (121) qui lie ledit manchon à ladite partie rigide (110), **caractérisée en ce que** chaque dispositif d'entrée (120) comporte un deuxième manchon (124) de plus petite section et une deuxième membrane souple (123) qui lie ce deuxième manchon (124) au premier manchon (122).

2. Boîte électrique (100) selon la revendication 1, dans laquelle ledit deuxième manchon (124) présente une extrémité libre (124A) fermée par un opercule (125) retirable.

3. Boîte électrique (100) selon la revendication 2, dans laquelle ledit opercule (125) porte une languette de préhension (126) pour arracher l'opercule (125).

4. Boîte électrique (100) selon l'une quelconque des revendications précédentes, dans laquelle chaque dispositif d'entrée (120) est réalisé d'une seule pièce monobloc en matière souple.

5. Boîte électrique (100) selon la revendication précédente, dans laquelle ladite matière souple est une matière élastomère telle qu'un caoutchouc ou un styrène éthylène butylène styrène (SEBS).

6. Boîte électrique (100) selon l'une quelconque des revendications précédentes, dans laquelle ladite partie rigide (110) est réalisée en une matière thermoplastique telle qu'un polystyrène, un polypropylène ou un polyamide.

7. Boîte électrique (100) selon l'une quelconque des revendications précédentes, dans laquelle chaque dispositif d'entrée (120) est surmoulé sur ladite partie rigide (110).

8. Boîte électrique (100) selon l'une quelconque des revendications précédentes, dans laquelle ladite partie rigide (110) comprenant une paroi latérale (110A) qui s'élève à partir d'un fond (110B), la première membrane souple (121) de chaque dispositif d'entrée (120) s'étend sur ladite paroi latérale (110A) et sur ledit fond (110B).

9. Boîte électrique (100) selon l'une quelconque des revendications précédentes, **caractérisée en ce qu'**elle comporte une pluralité de dispositif d'entrée (120) répartis sur son pourtour formant une pluralité d'entrées de gaine.

10. Procédé d'insertion d'une extrémité d'une gaine (10) de transport de câbles et/ou de conducteurs électriques à l'intérieur de la partie rigide (110) d'une boîte électrique (100) selon la revendication 4, qui comprend les étapes selon lesquelles :
a) on enfile l'extrémité de la gaine (10) sur le deuxième manchon (124) d'un dispositif d'entrée (120) jusqu'à ce qu'elle bute contre la deuxième membrane souple (123) ;
b) on insère ladite extrémité de la gaine (10) à l'intérieur de la partie rigide (110) de ladite boîte électrique (100) en traversant ledit premier manchon (122) qui se retrousse totalement sur la surface externe de la gaine en l'enveloppant étroitement ;
c) on continue d'insérer ladite extrémité de la gaine (10) à l'intérieur de ladite partie rigide (110) jusqu'à ce que ladite extrémité traverse ledit dispositif d'entrée en retroussant le deuxième manchon (124) ainsi que ladite deuxième membrane (123) sur la gaine (10);
d) on coupe la partie de la gaine qui émerge dudit dispositif d'entrée (120) à l'intérieur de la partie rigide (110); et
e) on tire la gaine (10) vers l'extérieur de la partie rigide (110) de la boîte électrique (100) pour positionner l'extrémité de la gaine (10) en dehors du volume intérieur utile de câblage de la boîte électrique (100), dans son mouvement de retrait, ladite gaine (10) entraînant lesdits premier et deuxième manchons (122, 124) ainsi que ladite deuxième membrane (123) avec elle de sorte qu'ils se retroussent vers l'extérieur de ladite partie rigide (110) tout en enveloppant étroitement l'extrémité de ladite gaine (10).

## Patentansprüche

1. Elektrische Anschlussdose (100) mit einem starren Abschnitt (110), der örtlich mit mindestens einer Einlassvorrichtung (120) für die Aufnahme eines Endes einer Transporthülle (10) für Kabel und/oder elektrische Leiter versehen ist, wobei jede Einlassvorrichtung (120) ein Anschlussstück (122) und eine flexible Membran umfasst (121), die das Anschlussstück mit dem starren Abschnitt (110) verbindet, **dadurch gekennzeichnet, dass** jede Einlassvorrichtung (120) ein zweites Anschlussstück (124) mit einem kleineren Durchmesser sowie eine zweite flexible Membran (123) umfasst, die dieses zweite Anschlussstück (124) mit dem ersten Anschlussstück (122) verbindet.

2. Elektrische Anschlussdose (100) nach Anspruch 1, bei der das zweite Anschlussstück (124) ein freies Ende (124A) aufweist, das durch einen (125) abziehbaren Deckel abgedeckt ist.

3. Elektrische Anschlussdose (100) nach Anspruch 2, bei der dieser Deckel (125) mit einer Griffzunge (126) versehen ist, um den Deckel (125) wegzureißen.

4. Elektrische Anschlussdose (100) nach einem der vorausgehenden Ansprüche, bei der jede Einlassvorrichtung (120) aus einem einzigen Blockgussstück aus einem flexiblen Material hergestellt ist.

5. Elektrische Anschlussdose (100) nach vorhergehendem Anspruch, bei der dieses flexible Material ein Elastomer wie zum Beispiel Gummi oder Styrol-Etylen-Butylen-Styrol (SEBS) ist.

6. Elektrische Anschlussdose (100) nach einem der vorausgehenden Ansprüche, bei der der starre Abschnitt (110) aus einem thermoplastischen Material wie zum Beispiel Polystyrol, Polypropylen oder Polyamid hergestellt ist.

7. Elektrische Anschlussdose (100) nach einem der vorausgehenden Ansprüche, bei der jede Einlassvorrichtung (120) an diesem starren Abschnitt (110) übergossen ist.

8. Elektrische Anschlussdose (100) nach einem der vorausgehenden Ansprüche, bei der der starre Abschnitt (110) eine Seitenwand (110A) umfasst, die sich von einem Boden (110B) ausgehend erhebt und bei der sich die erste flexible Membran (121) jeder Einlassvorrichtung (120) an der Seitenwand (110A) und auf dem Boden (110B) erstreckt.

9. Elektrische Anschlussdose (100) nach einem der vorausgehenden Ansprüche, **dadurch gekennzeichnet, dass** sie eine Vielzahl von Einlassvorrichtungen (120) umfasst, die an ihrem Außenrand verteilt sind und eine Vielzahl von Eingängen für Kabelhüllen bilden.

10. Einfädelungsverfahren eines Endes einer Transporthülle (10) für Kabel und/oder elektrische Leiter in den Innenraum des starren Abschnitts (110) einer elektrischen Anschlussdose (100) nach Anspruch 4, das folgende Schritte umfasst:
a) man fädelt das Ende der Hülle (10) am zweiten Anschlussstück (124) einer Einlassvorrichtung (120) so weit ein, bis es an der zweiten flexiblen Membran (123) anstoßt;
b) man führt das Ende der Hülle (10) in den Innenraum des starren Abschnitts (110) der elektrischen Anschlussdose (100) ein, wobei das erste Anschlussstück (122) durchquert wird, welches sich vollständig über die Außenfläche der Hülle stülpt und diese eng umhüllt;
c) man fährt mit dem Einführen des Hüllenendes (10) in den Innenraum des starren Abschnitts (110) fort, bis das Hüllenende die Einlassvorrichtung durchdringt, wobei sich das zweite Anschlussstück (124) sowie die zweite Membran (123) über die Hülle (10) stülpen;
d) man schneidet das von der Einlassvorrichtung (120) im Innenraum des starren Abschnitts (110) abstehende Hüllenteil ab; und
e) man zieht die Hülle (10) zur Außenseite des starren Abschnitts (110) der elektrischen Anschlussdose (100), um das Hüllenende (10) außerhalb des zum Verkabeln der elektrischen Anschlussdose (100) erforderlichen Innenraums zu positionieren, wobei die Hülle (10) beim Herausziehen auch das erste und zweite Anschlussstück (122, 124) sowie die zweite Membran (123) mit sich herauszieht, sodass sie zur Außenseite des starren Abschnitts (110) gestülpt werden und dabei trotzdem das Ende der Hülle (10) eng umschließen.

## Claims

1. An electrical box (100) comprising a rigid portion (110) that is provided locally with at least one inlet device (120) for receiving an end of a conduit (10) for passing cables and/or electrical conductors, each inlet device (120) including a sleeve (122) and a flexible diaphragm (121) that connects said sleeve to said rigid portion (110), said electrical box being **characterized in that** each inlet device (120) includes a second sleeve (124) of smaller section, and a second flexible diaphragm (123) that connects the second sleeve (124) to the first sleeve (122).

2. An electrical box (100) according to claim 1, wherein said second sleeve (124) presents a free end (124A) that is closed by a removable membrane (125).

3. An electrical box (100) according to claim 2, wherein said membrane (125) carries a grip tab (126) for tearing off the membrane (125).

4. An electrical box (100) according to any preceding claim, wherein each inlet device (120) is made as a single piece made of flexible material.

5. An electrical box (100) according to the preceding claim, wherein said flexible material is an elastomer material such as a rubber or a styrene-ethylene-butylene-styrene (SEBS).

6. An electrical box (100) according to any preceding claim, wherein said rigid portion (110) is made of a thermoplastic material such as a polystyrene, a polypropylene, or a polyamide.

7. An electrical box (100) according to any preceding claim, wherein each inlet device (120) is overmolded on said rigid portion (110).

8. An electrical box (100) according to any preceding claim, wherein said rigid portion (110) includes a side wall (110A) that extends upwards from a bottom wall (110B), the first flexible diaphragm (121) of each inlet device (120) extends over said side wall (110A) and over said bottom wall (110B).

9. An electrical box (100) according to any preceding claim, **characterized in that** it includes a plurality of inlet devices (120) that are distributed over its periphery forming a plurality of conduit inlets.

10. A method of inserting an end of a conduit (10) for passing cables and/or electrical conductors into the rigid portion (110) of an electrical box (100) according to claim 4, which method comprises the following steps:
a) sliding the end of the conduit (10) over the second sleeve (124) of an inlet device (120) until it comes into abutment against the second flexible diaphragm (123);
b) inserting said end of the conduit (10) into the rigid portion (110) of said electrical box (100) by passing through said first sleeve (122) that rolls back completely over the outer surface of the conduit surrounding it tightly;
c) continuing to insert said end of the conduit (10) into said rigid portion (110) until said end passes through said inlet device by rolling back the second sleeve (124) and said second diaphragm (123) over the conduit (10);
d) cutting off the portion of the conduit that emerges from said inlet device (120) inside the rigid portion (110); and
e) pulling the conduit (10) towards the outside of the rigid portion (110) of the electrical box (100) so as to position the end of the conduit (10) outside the inside volume of the electrical box (100) that is used for making connections, said conduit (10) entraining said first and second sleeves (122, 124) and said second diaphragm (123) with it during its movement while being pulled out so that they are rolled back towards the outside of said rigid portion (110) while surrounding the end of said conduit (10) tightly.
